# EUROPEAN PATENT SPECIFICATION

(11) **EP 2 719 556 B1**
(45) Date of publication and mention of the grant of the patent: **01.04.2020**
(21) Application number: 13004533.9
(22) Date of filing: 17.09.2013
(51) Int. Cl.: B60G 17/017, B60T 7/16

(54) **Portable electronic device for changing trailer height using the pneumatic suspension**
Tragbares elektronisches Gerät zum Ändern der Anhängerhöhe mit der Luftfederung
Dispositif électronique portable pour modifier la hauteur de la remorque à l'aide de la suspension pneumatique

(30) Priority: 17.09.2012 GB 201216540
(43) Date of publication of application: 16.04.2014
(73) Proprietor: Knorr-Bremse Systems for Commercial Vehicles Limited, Bristol BS16 7FE (GB); KNORR-BREMSE Systeme für Nutzfahrzeuge GmbH, 80809 München (DE)
(72) Inventor: Fry, Matthew, Bristol, BS16 7FE (GB); Lumley, Andrew, Bristol, BS16 7FE (GB); Pahl, Stefan, D-80809 Munchen (DE); Mederer, Martin, D-80809 Munchen (DE)
(74) Representative: JENSEN & SON

(56) References cited:
- DE-A1-102004 050 502
- GB-A- 2 419 718
- US-A1- 2004 070 160

## Description

The invention relates to a trailer electronic braking system.

Vehicle trailers such as those used in the distribution of goods are provided with an air suspension system, in which the suspension is provided by airbags at each axle end. The pressure in the airbags is adjustable depending on loading conditions on the trailer.

As loading bays used in distribution depots are not of a standard height, a raise/lower valve is provided so that the height of the trailer can be changed from the drive position, which is the ideal height for driving conditions, by increasing or reducing the amount of air in the airbags. Raise/lower valves are typically manually controlled using a lever or buttons but it is known to provide the suspension system with a so-called reset to ride valve, which ensures that the trailer is automatically set to the correct height for driving conditions in the event that the trailer is driven in a raised or lowered position.

The modification of trailer height in the known systems operates in the presence of the operator. The modification of the air suspension to change the trailer height if the operator were not present is potentially hazardous as the trailer height could be changed during a loading or unloading operation.

US2003/0052532 discloses a vehicle brake system comprising automatic brake application means. A signalling device allows a user to generate a signal indicating that the brakes are to be applied independent of the pedal normally used to apply the brakes. A remote signalling device using wireless communication allows a user to remotely apply the brakes. In addition, the system enables a user to inspect operation of the brake components and to ensure that brake lights are operational.

US2004/0070160 discloses an automatic trailer suspension control system arranged to regulate vehicle height during loading and/or unloading. The trailer suspension control system is connected to a standard braking system and comprises a control valve operable by an electronic control unit (ECU) provided with a standards compliant communication interface. The ECU is adapted to communicate wirelessly with a transmission device.

The present invention seeks to provide air suspension control apparatus that is remotely operable.

According to the invention there is provided a trailer vehicle function control system for a trailer, the system comprising a control valve operable by an electronic control unit, which electronic control unit is provided with a standards compliant communications interface adapted to communicate wirelessly with a portable electronic device, characterised in that if the electronic control unit is enabled to receive vehicle control functions from a portable electronic device, the signal strength of the standards compliant communications interface is controlled to a level to ensure that the portable electronic device is within a predetermined distance from the communications bus.

Preferably, the control function controls the air suspension so that the height of the trailer can be raised or lowered by changing the air pressure in air bags associated with an axle of the trailer. Preferably, the electronic control unit is the trailer braking electronic control unit. Preferably, the communication interface comprises a 802.11 wireless card, which card is adapted to transmit an SSID, the trailer identifier comprising the SSID. Preferably, the electronic control unit is provided with a list of MAC addresses associated with allowable portable electronic devices, the control unit detecting the MAC address of any further devices it detects such that it only pairs with an allowable MAC address. Preferably, the predetermined distance is 10m. Preferably, when the electronic control unit controls the signal strength when it pairs with a portable electronic device enabled to control vehicle functions.

Exemplary embodiments of the invention will now be described in greater detail with reference to the drawings in which:

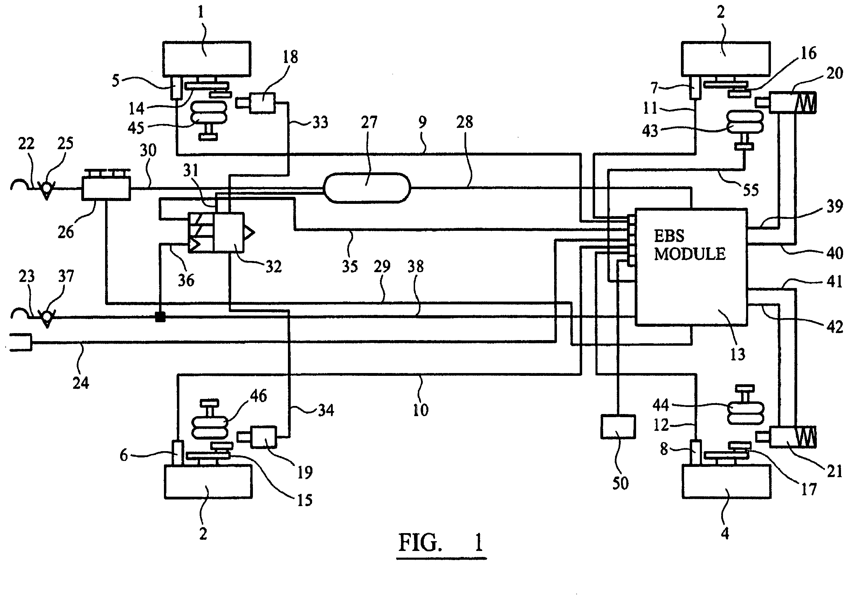

Fig. 1 shows a trailer electronic braking system
Fig. 2 shows a schematic diagram of the brake control with a trailer access microcontroller

The utility vehicle trailer has a steerable front axle with front wheels 1, 2 and a rear axle with rear wheels 3, 4. Rotational wheel speed sensors 5-8 are in each case assigned to the front wheels 1, 2 and the rear wheels 3, 4, and are connected by way of electric lines 9-12 with an electropneumatic brake pressure control module 13 (EBS module) which is primarily assigned to the rear axle brakes. One brake 14-17 is in each case assigned to the front wheels 1, 2 and the rear wheels 3, 4, which brake 14-17 can be applied by means of brake cylinders 18, 19 of the front axle or springloaded brake cylinders 20, 21 of the rear axle.

The braking system of the trailer vehicle can be connected by way of three connections, specifically a pneumatic supply line connection 22, a pneumatic control line connection 23 and an electric control connection 24, with the braking system of a tractor or a further trailer. The electric control line 24 provides the ISO 11992 CAN data connection.

The supply line connection 22 is connected by way of a filter valve 25 and a parking valve 26 with an air brake reservoir 27. From the air brake reservoir 27, a pneumatic line 28, 30 leads to a supply input of the pressure control module 13 and electropneumatic valve 32, which is adapted to supply ABS functionality. In addition, a pneumatic line 29 branches off the parking valve 26 to the pressure control module 13. A pneumatic line 30 extends between the parking valve 26 and the air brake reservoir 27.

The electropneumatic valve 32 is assigned jointly to both brake cylinders 18, 19 of the front axle and is connected with the brake cylinder 18 by way of a pneumatic line 33 and with the brake cylinder 19 by way of a pneumatic line 34. The valve 32 has two electric control inputs which are connected by way of "one" electric communication line 35 such as CAN, shown here only schematically, with the pressure control module 13.

Furthermore, the valve 32 has a pneumatic control input 36 which is connected by way of a filter valve 37 with the pneumatic control connection 23. The pneumatic control input 36 is also connected by way of a pneumatic control line 38 with a pneumatic control input of the pressure control module 13. The pressure control module 13 has an integrated pressure sensor (not shown) which measures the pressure in the pneumatic control line 38, that is, the control pressure present at the pneumatic control input 36 of the electropneumatic valve, which control pressure is identical to the maximal pressure which can be controlled into the brake cylinders 18, 19.

The pressure control module 13 has pneumatic outputs 39-42 which are connected by way of assigned pneumatic lines with the spring brake cylinders 20 or 21.

Furthermore, air bags 43, 44 are provided at the rear axle and permit a determination of the axle load, particularly of the dynamic axle load during braking and starting. The air bags 43, 44 are connected by way of pneumatic lines with the pressure control module 13. The pressure control module 13 has an integrated pressure sensor (not shown) which measures the pressure in the air bags 43, 44. Correspondingly the pressure in airbags 45, 46 provided at the front axle, which here are electrically controlled, may be detected by an optional pressure transducer. The pressure in the airbags 43-46 can be increased or decreased so as to adjust the height of the trailer.

To provide stability control a lateral acceleration sensor is provided, which may also be integrated with a yaw sensor, and the output of the lateral acceleration sensor is fed to the pressure control module/ECU 13. Typically the lateral acceleration sensor is integrated into the pressure control module/ECU 13. In the event that lateral acceleration on the trailer is detected, the pressure control module can provide for increased brake force at the front and/or rear axles. When the lateral acceleration sensor detects lateral acceleration on the trailer in which it is installed, the sensor generates a signal setting the stability control to active.

The pressure control module 13 receives data from the wheel speed sensors on the trailer and also receives a signal indicating whether the brake pedal in the vehicle cab is depressed or not, as well as the brake pressure demand.

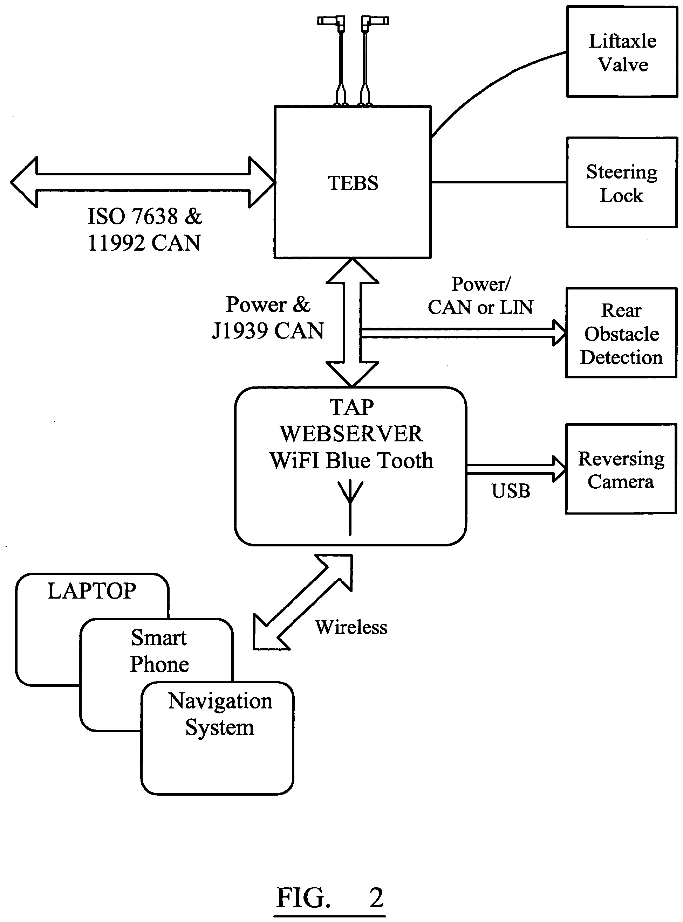

Figure 2 shows schematically the arrangement of the trailer access microcontroller with the trailer electronic braking system. The trailer electronic braking system is only partially illustrated for reasons of clarity but includes the pressure control module 13 which is shown receiving wheel speed signals from wheel speed sensors 5,6, The pressure control module 13 also receives inputs from the lift axles showing the position of the lift axles and also the steering lock. The pressure control module 13 also receives power and data via an electrical connection from the tractor and is also attached to an ISO 11992 CAN databus.

A trailer access point (TAP) comprising microcontroller 60 with a CAN interface is also provided, which is powered from the electrical connection, The microcontroller 60 itself comprises an interface to the on-board electronic systems and the trailer electronic braking system and an interface for sending and receiving data in a wireless format. The communications interface can comprise one or more of a 802.11 transceiver or Bluetooth transceiver or radio transceiver. 802.11 and Bluetooth signals can have a reception and transmission range of up to 100 metres in free air. The trailer access point is connected to the CAN bus on the trailer and so is able to receive data from other devices on the CAN bus. The trailer access point can further be provided with USB ports, which enables the addition of peripheral devices on the trailer. An exemplary device on the CAN bus is the rear obstacle detector and an exemplary device attached to the USB port is a reversing camera. USB is preferable in this case as the camera would generate large amounts of data compared to the remaining data on the CAN bus.

The trailer access point can be mounted in a housing similar to that used for a trailer information module but without a display being necessary. If a display is needed, it would be possible to use a bistablecholestatic display or zero power LCD display.

In use, when the trailer access point is powered, the provision of the access point enables the data from the devices to be read by another device with a client browser. Such devices could include a tractor navigation system or a smartphone. It would also be possible to use a laptop.

Each trailer is provided with a vehicle identification number (VIN), which is usually provided on a plate on the side of the trailer. These plates are also often provided with a barcode or other machine readable data recording the same information. The wireless communication card on the trailer access point microcontroller is provided with its own identifier such as the service set identifier or SSID for an 802.11 card. The SSID can also preferably be set to be the same as or include the trailer VIN. The depot operator or truck driver is then provided with a device such as a smartphone so that the handheld device can be used to pair with the microcontroller and hence trailer with the truck. If the truck is provided with a navigation system, it would be possible to use this. To provide some additional security, the trailer access point microcontroller may be provided with a list of allowed MAC addresses with which it is permitted to pair. As an alternative to using the SSID as an identifier, it would also be possible to use the fleet number as an identifier.

The modification of the air suspension to change the trailer height or other safety critical features can be potentially hazardous if the operator is not located close to the vehicle to supervise the result of the height change requests. This is particularly the case if the height is changed remotely if, for example, the driver is in a rest area away from the trailer and decides to use the function.

If the trailer access point is set to receive vehicle control functions via a wireless connection such as 802.11 or Bluetooth, the trailer access point reduces the power of the radio signal transmission power to a level that ensures that the paired device used to actuate the control function is within a radius of the trailer access point where the trailer should be visible to the driver or operator. This is preferably 10m or less. This ensures that the operator should be able to observe the operation of the trailer.

Although the trailer access point has been specifically described as a microcontroller, it would be possible to incorporate the functionality as an auxiliary function in the trailer electronic brake control unit. The trailer electronic brake control unit receives the operational data from the sensor outputs but would need to have an additional communication interface to be able to provide the interface to the standards compliant browser or client.

## Claims

1. A trailer vehicle function control system for a trailer, the system comprising a control valve (32) operable by an electronic control unit (13), which electronic control unit (13) is provided with a standards compliant communications interface adapted to communicate wirelessly with a portable electronic device,
**characterised in that** if the electronic control unit (13) is enabled to receive vehicle control functions from a portable electronic device, the signal strength of the standards compliant communications interface is controlled to a level to ensure that the portable electronic device is within a predetermined distance from the communications bus.

2. A trailer vehicle function control system according to Claim 1, wherein the electronic control unit (13) is the trailer braking electronic control unit.

3. A trailer vehicle function control system according to Claim 1 or Claim 2, wherein the communication interface comprises a 802.11 wireless card, which card is adapted to transmit an SSID, the trailer identifier comprising the SSID.

4. A trailer vehicle function control system according to any one of Claims 1 to 3, wherein the electronic control unit is provided with a list of MAC addresses associated with allowable portable electronic devices, the control unit detecting the MAC address of any further devices it detects such that it only pairs with an allowable MAC address.

5. A trailer vehicle function control system according to any one of Claims 1 to 4, wherein the predetermined distance is 10m.

6. A trailer vehicle function control system according to any one of Claims 1 to 5, wherein when the electronic control unit (13) controls the signal strength when it pairs with a portable electronic device, which device is enabled to control vehicle functions.

7. A trailer vehicle function control system according to any one of Claims 1 to 6, wherein the control function controls the air suspension so that the height of the trailer can be raised or lowered by changing the air pressure in air bags associated with an axle of the trailer.

## Patentansprüche

1. Ein Anhängerfahrzeug-Funktionssteuersystem für einen Anhänger, das ein durch eine elektronische Steuereinheit (13) betätigbares Regelventil (32) umfasst, wobei die elektronische Steuereinheit (13) mit einer normgerechten Kommunikationsschnittstelle versehen ist, die darauf ausgelegt ist, drahtlos mit einem tragbaren elektronischen Gerät zu kommunizieren,
**dadurch gekennzeichnet, dass** wenn die elektronische Steuereinheit (13) aktiviert ist, Fahrzeugsteuerfunktionen von einem tragbaren elektronischen Gerät zu empfangen, die Signalstärke der normgerechten Kommunikationsschnittstelle so eingestellt ist, dass sich das tragbare elektronische Gerät innerhalb eines vorgegebenen Abstands von dem Kommunikationsbus befindet.

2. Ein Anhängerfahrzeug-Funktionssteuersystem nach Anspruch 1, wobei die elektronische Steuereinheit (13) die elektronische Steuereinheit für die Anhängerbremsung ist.

3. Ein Anhängerfahrzeug-Funktionssteuersystem nach Anspruch 1 oder Anspruch 2, wobei die Kommunikationsschnittstelle eine Wireless-Karte 802.11 umfasst und die Karte darauf ausgelegt ist, eine SSID zu übertragen, und wobei die Anhängerkennung die SSID umfasst.

4. Ein Anhängerfahrzeug-Funktionssteuersystem nach einem der Ansprüche 1 bis 3, wobei die elektronische Steuereinheit mit einer Liste von MAC-Adressen versehen ist, die zulässigen tragbaren elektronischen Geräten zugeordnet sind, wobei die Steuereinheit die MAC-Adresse weiterer Geräte, die es erfasst, erfasst, so dass die Paarung nur mit einer zulässigen MAC-Adresse erfolgt.

5. Ein Anhängerfahrzeug-Funktionssteuersystem nach einem der Ansprüche 1 bis 4, wobei der vorgegebene Abstand 10 Meter beträgt.

6. Ein Anhängerfahrzeug-Funktionssteuersystem nach einem der Ansprüche 1 bis 5, wobei die elektronische Steuereinheit (13) bei der Paarung mit einem tragbaren elektronischen Gerät die Signalstärke kontrolliert und wobei das Gerät aktiviert ist, um Fahrzeugfunktionen zu steuern.

7. Ein Anhängerfahrzeug-Funktionssteuersystem nach einem der Ansprüche 1 bis 6, wobei die Steuerfunktion die Luftfederung steuert, so dass die Höhe des Anhängers erhöht oder verringert werden kann, indem der Luftdruck in dem der Anhängerachse zugeordneten Luftkissen verändert wird.

## Revendications

1. Système de commande de fonction de véhicule à remorque pour une remorque, le système comprenant une soupape de commande (32) pouvant être opérée par un module de commande électronique (13), lequel module de commande électronique (13) est pourvu d'une interface de communications conforme aux normes adaptée à communiquer sans fil avec un dispositif électronique portable, **caractérisé en ce que**, si le module de commande électronique (13) est activé pour recevoir des fonctions de commande de véhicule d'un dispositif électronique portable, l'intensité du signal de l'interface de communications conforme aux normes est commandée à un niveau pour garantir que le dispositif électronique portable est au sein d'une distance prédéterminée du bus de communications.

2. Système de commande de fonction de véhicule à remorque selon la revendication 1, dans lequel le module de commande électronique (13) est le module de commande électronique de freinage de remorque.

3. Système de commande de fonction de véhicule à remorque selon la revendication 1 ou la revendication 2, dans lequel l'interface de communication comprend une carte sans fil 802.11, laquelle carte est adaptée à transmettre un identifiant SSID, l'identifiant de remorque comprenant l'identifiant SSID.

4. Système de commande de fonction de véhicule à remorque selon l'une quelconque des revendications 1 à 3, dans lequel le module de commande électronique est pourvu d'une liste d'adresses MAC associées à des dispositifs électroniques portables autorisables, le module de commande détectant l'adresse MAC de tout autre dispositif qu'il détecte de sorte qu'il ne s'apparie qu'avec une adresse MAC autorisable.

5. Système de commande de fonction de véhicule à remorque selon l'une quelconque des revendications 1 à 4, dans lequel la distance prédéterminée est de 10 m.

6. Système de commande de fonction de véhicule à remorque selon l'une quelconque des revendications 1 à 5, dans lequel, lorsque le module de commande électronique (13) commande l'intensité du signal lorsqu'il s'apparie avec un dispositif électronique portable, lequel dispositif est activé pour commander des fonctions de véhicule.

7. Système de commande de fonction de véhicule à remorque selon l'une quelconque des revendications 1 à 6, dans lequel la fonction de commande commande la suspension d'air de sorte que la hauteur de la remorque peut être élevée ou abaissée en changeant la pression d'air dans des coussins d'air associés à un essieu de la remorque.
